# EUROPEAN PATENT APPLICATION

(11) **EP 4 456 208 A1**
(43) Date of publication of application: **30.10.2024**
(21) Application number: 21969036.9
(22) Date of filing: 23.12.2021
(51) Int. Cl.: H01M 8/0202, H01M 8/0206, H01M 8/0247, H01M 8/12

(54) **SOLID OXIDE FUEL BATTERY**

(71) Applicant: NISSAN MOTOR CO., LTD., Kanagawa 221-0023 (JP)
(72) Inventor: IKEGUCHI, Ken Bryan, Atsugi-shi, Kanagawa 243-0123 (JP); SHIOMI, Takeshi, Atsugi-shi, Kanagawa 243-0123 (JP); ICHIHARA, Keiji, Atsugi-shi, Kanagawa 243-0123 (JP)
(74) Representative: Grünecker Patent- und Rechtsanwälte PartG mbB
(86) International application number: PCT/JP2021/048054
(87) International publication number: WO 2023/119603

(57) **Abstract**

Provided is a solid oxide fuel cell that includes a plurality of laminated power generation cells each including a solid electrolyte layer, an anode electrode disposed on one surface of the solid electrolyte layer, and a cathode electrode disposed on the other surface of the solid electrolyte layer, a separator provided between the power generation cells and separated from the power generation cells, an anode flow path formed between an anode electrode side of the power generation cell and the separator, and a cathode flow path formed between a cathode electrode side of the power generation cell and the separator. An anode-side support member joined to the separator and the anode electrode side of the power generation cell is provided in the anode flow path, a cathode-side support member joined to the separator and the cathode electrode side of the power generation cell is provided in the cathode flow path, and a joining area of a second joining portion at which the cathode-side support member and the separator are joined is greater than a joining area of a first joining portion at which the anode-side support member and the separator are joined.

## Description

### TECHNICAL FIELD

The present invention relates to a solid oxide fuel cell.

### BACKGROUND ART

JP 2019-200878 A disclose a fuel cell stack in which a plurality of power generation cells (unit battery cells) are laminated. The fuel cell stack includes a separator that forms a gas flow path between the power generation cells, and a current collecting member that is joined to the separator and the power generation cell in the gas flow path.

### SUMMARY OF INVENTION

Although a fuel cell is provided with an anode flow path through which a fuel gas (anode gas) flows and a cathode flow path through which air (cathode gas) flows, a gas flow rate in the cathode flow path is generally higher than a gas flow rate in the anode flow path, and thus an internal pressure in the cathode flow path is higher. Therefore, in the fuel cell stack described in JP 2019-200878 A, a relatively large force acts on a joining portion between the current collecting member and the separator in the cathode flow path due to an internal pressure difference between the anode flow path and the cathode flow path, and there is a risk that the current collecting member is peeled off and damaged.

On the other hand, in the case in which a thickness of the separator is increased to prevent deformation of the separator so as to enhance a joining force with the current collecting member, the entire fuel cell stack becomes heavy.

The present invention has been made in view of the above problems, and an object thereof is to provide a solid oxide fuel cell that is reduced in weight while preventing damage to the fuel cell.

According to an aspect of this invention, there is provided a solid oxide fuel cell that includes a plurality of laminated power generation cells each including a solid electrolyte layer, an anode electrode disposed on one surface of the solid electrolyte layer, and a cathode electrode disposed on the other surface of the solid electrolyte layer, a separator provided between the power generation cells and separated from the power generation cells, an anode flow path formed between an anode electrode side of the power generation cell and the separator, and a cathode flow path formed between a cathode electrode side of the power generation cell and the separator. An anode-side support member joined to the separator and the anode electrode side of the power generation cell is provided in the anode flow path, a cathode-side support member joined to the separator and the cathode electrode side of the power generation cell is provided in the cathode flow path, and a joining area of a second joining portion at which the cathode-side support member and the separator are joined is greater than a joining area of a first joining portion at which the anode-side support member and the separator are joined.

### BRIEF DESCRIPTION OF DRAWINGS

[FIG. 1] FIG. 1 is an exploded perspective view of a fuel cell stack according to an embodiment of the present invention.
[FIG. 2] FIG. 2 is an exploded perspective view of a portion in which power generation units in FIG. 1 are laminated.
[FIG. 3] FIG. 3 is a schematic cross-sectional view taken along a line III-III in FIG. 2.
[FIG. 4] FIG. 4 is an enlarged view of a portion surrounded by a rectangle A in FIG. 3.

### DESCRIPTION OF EMBODIMENTS

Hereinafter, embodiments of the present invention will be described with reference to the drawings and the like.

### [First Embodiment]

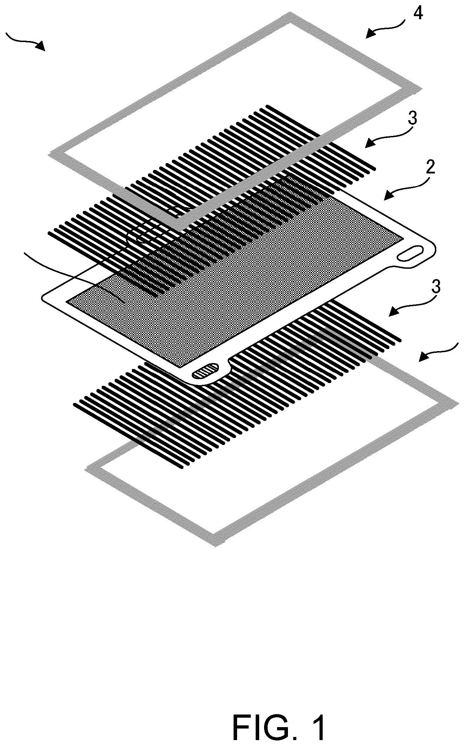

FIG. 1 is an exploded perspective view of a power generation unit 1 constituting a power generation module of a solid oxide fuel cell 100 (hereinafter, also simply referred to as "fuel cell") according to the present embodiment. The solid oxide fuel cell 100 according to the present embodiment is mainly mounted on a vehicle or the like, but is not limited thereto.

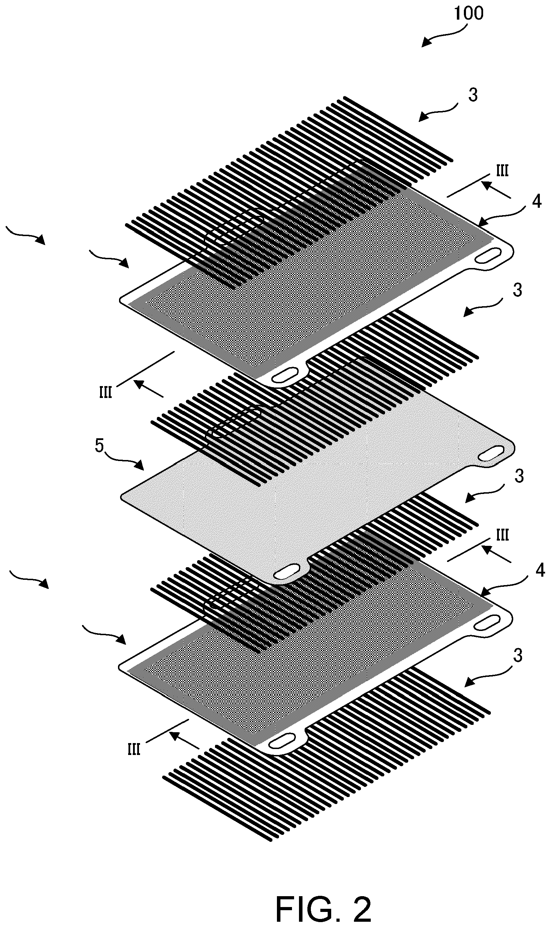

The power generation unit 1 includes a power generation cell 2, interconnectors 3 made of a metal, and seal members 4 that seal outer edges of the interconnectors 3. The interconnectors 3 are joined to both surfaces of an active area 2A which is a region contributing to power generation of the power generation cell 2. Further, the seal members 4 are joined to both surfaces of outer edge portions of the power generation cells 2 (see FIG. 2). Details of a method for joining the power generation cell 2 and the interconnector 3 will be described later.

FIG. 2 is an exploded perspective view in which two power generation units 1 are laminated. Although the solid oxide fuel cell 100 is formed by laminating a plurality of power generation units 1, the solid oxide fuel cell 100 is a stack of the two power generation units 1 in FIG. 2 for convenience.

As shown in FIG. 2, a separator 5 is interposed between the two power generation units 1. The two power generation units 1 are laminated by metal-joining the interconnector 3 of one power generation unit 1 to one surface of the separator 5 and the interconnector 3 of the other power generation unit 1 to the other surface of the separator 5. Although the two power generation units 1 are laminated in FIG. 2, more power generation units 1 can be laminated in the same manner.

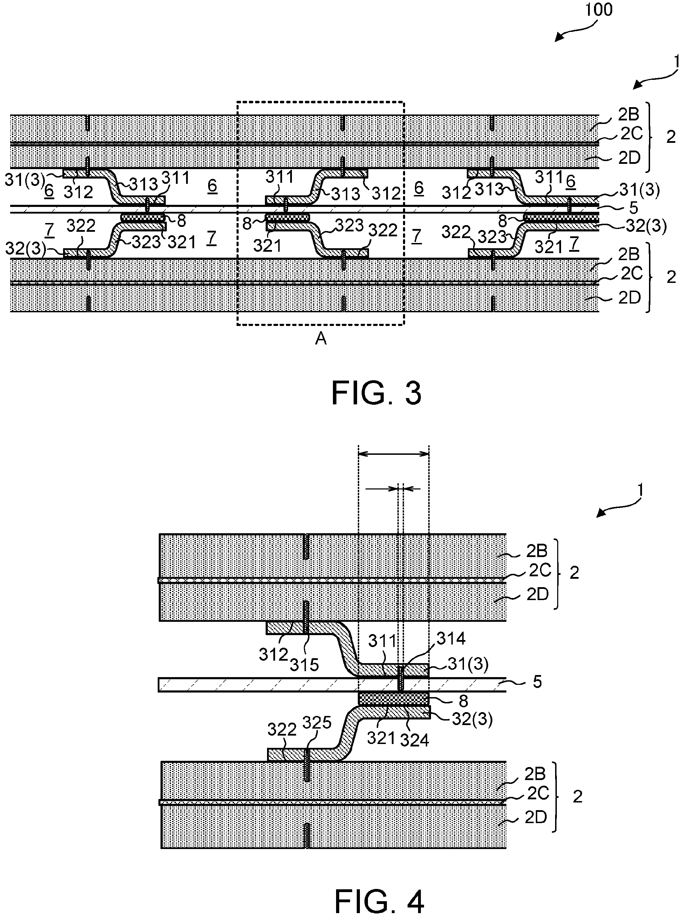

FIG. 3 is a view schematically showing a cross section taken along a line III-III in FIG. 2. In FIG. 3, for the sake of simplicity, an outer edge portion of the power generation unit 1 is omitted, and only a part of the cross section is shown in an enlarged manner. Here, a power generation unit in a state in which the interconnector 3 is joined to the power generation cell 2 and the separator 5 is referred to as the power generation unit 1.

As shown in FIG. 3, the power generation cell 2 includes a membrane electrode assembly 2C in which an anode electrode is disposed on one surface of a solid electrolyte layer and a cathode electrode is disposed on the other surface thereof, a cathode support layer 2B that supports the cathode electrode, and an anode support layer 2D that supports the anode electrode. The cathode support layer 2B and the anode support layer 2D are porous metal bodies configured not to inhibit supplies of an anode gas and a cathode gas, respectively, and are formed of, for example, ferritic stainless steel. In FIG. 3, the cathode electrode is disposed on an upper surface side of the membrane electrode assembly 2C, and the anode electrode is disposed on a lower surface side thereof.

The separator 5 is disposed between two adjacent power generation cells 2 and separated from the cathode support layer (porous metal support layer) 2B and the anode support layer (porous metal support layer) 2D. The separator 5 forms an anode flow path 6 for supplying a fuel gas to the anode electrode between the anode support layer 2D of the power generation cell 2 (anode electrode side of the power generation cell 2) and the separator 5. Further, the separator 5 forms a cathode flow path 7 for supplying air to the cathode electrode between the cathode support layer 2B of the power generation cell 2 (cathode electrode side of the power generation cell 2) and the separator 5. A material constituting the separator 5 is not particularly limited as long as the material is a conductive and thermally conductive material, but for example, an alloy containing iron (Fe) or chromium (Cr), a metal, or the like is used, and ferritic stainless steel is preferably used.

The interconnector 3 is disposed between the active area 2A of the power generation cell 2 and the separator 5, and connects the separator 5 and the porous metal support layers 2B and 2D. The interconnector 3 is a current collecting member having a power collecting function, and also functions as a support member that supports the power generation cell 2 and the separator 5.

The interconnector 3 includes an anode-side interconnector (anode-side support member) 31 disposed between the anode support layer (porous metal support layer on the anode electrode side) 2D of the power generation cell 2 and the separator 5, and a cathode-side interconnector (cathode-side support member) 32 disposed between the cathode support layer (porous metal support layer on the cathode electrode side) 2B of the power generation cell 2 and the separator 5. A material constituting the interconnector 3 is not particularly limited as long as the material is a conductive and thermally conductive material, and for example, ferritic stainless steel containing aluminum or the like is used.

The anode-side interconnector 31 is a member including a first contact portion 311 that is in contact with an upper surface of the separator 5, a third contact portion 312 that is in contact with a lower surface of the anode support layer 2D, and a connecting portion 313 that connects the first contact portion 311 and the third contact portion 312. The anode-side interconnector 31 and the separator 5 are welded at the first contact portion 311, and the anode-side interconnector 31 and the anode support layer 2D are welded at the third contact portion 312. In the present embodiment, laser welding is used as a welding method, but the present invention is not limited thereto.

A plurality of the anode-side interconnectors 31 are arranged in the anode flow path 6 in a width direction of the separator 5. Accordingly, the anode flow path 6 between the separator 5 and the anode support layer 2D is partitioned into a plurality of flow paths surrounded by the separator 5, the anode-side interconnector 31, and the anode support layer 2D.

The cathode-side interconnector 32 is a member including a second contact portion 321 that is in contact with a lower surface of the separator 5, a fourth contact portion 322 that is in contact with an upper surface of the cathode support layer 2B, and a connecting portion 323 that connects the second contact portion 321 and the fourth contact portion 322. Here, the cathode-side interconnector 32 and the separator 5 are joined to each other at the second contact portion 321 by diffusion joining using a joining material 8 made of a metal, and the cathode-side interconnector 32 and the cathode support layer 2B are welded to each other at the fourth contact portion 322.

A plurality of the cathode-side interconnectors 32 are arranged in the cathode flow path 7 in the width direction of the separator 5. Accordingly, the cathode flow path 7 between the separator 5 and the cathode support layer 2B is partitioned into a plurality of flow paths surrounded by the separator 5, the cathode-side interconnector 32, and the cathode support layer 2B.

As described above, in the solid oxide fuel cell 100, the separator 5 is provided between the power generation cells 2, is separated from the power generation cells 2, and partitions the anode flow path 6 and the cathode flow path 7, and the interconnector (support member) 3 that connects the separator 5 and the power generation cell 2 is disposed in the anode flow path 6 and the cathode flow path 7.

In the fuel cell, a gas flow rate in a cathode flow path through which the air (cathode gas) flows is generally greater than a gas flow rate in an anode flow path through which the fuel gas (anode gas) flows, so that an internal pressure of the cathode flow path becomes higher. Therefore, a relatively large force acts on a joining portion between an interconnector (current collecting member and support member) in the cathode flow path and a separator due to an internal pressure difference between the anode flow path and the cathode flow path, and there is a risk that the interconnector is peeled off and the fuel cell is damaged.

On the other hand, in the case in which a thickness of the separator is increased to prevent deformation of the separator so as to enhance a joining force between the interconnector and the separator, a weight of the entire fuel cell is increased.

In the case in which a spacer is provided between the interconnector and the separator and the deformation of the separator is prevented by absorbing a force in a lamination direction of the power generation cell, the spacer reduces a cross-sectional area of a gas flow path (anode flow path and cathode flow path), thereby increasing an internal pressure. Therefore, a reinforcing member is further required, and the weight of the fuel cell is further increased.

Therefore, in the present embodiment, a joining area of a joining portion between the cathode-side interconnector 32 and the separator 5 is larger than that of a joining portion between the anode-side interconnector 31 and the separator 5. Accordingly, a joining force between the cathode-side interconnector 32 and the separator 5 is enhanced, the cathode-side interconnector 32 is prevented from being peeled off from the separator 5, and the fuel cell 100 is prevented from being damaged. Further, since the joining force between the cathode-side interconnector 32 and the separator 5 is improved, the separator 5 can be thinned, and the weight of the fuel cell 100 can be reduced.

Hereinafter, referring to FIGS. 3 and 4, details of joining of the interconnector 3 to the separator 5 and joining of the interconnector 3 to the power generation cell 2 will be described.

As shown in FIG. 3, the plurality of the anode-side interconnectors 31 and the plurality of the cathode-side interconnectors 32 are separately arranged at intervals between the separator 5 and the power generation cell 2. By arranging the interconnectors 3 at intervals in this manner, flow path cross-sectional areas of the anode flow path 6 and the cathode flow path 7 increase. Since the internal pressure in the flow path decreases when a cross-sectional area increases, it is possible to prevent an increase in internal pressure difference between the anode flow path 6 and the cathode flow path 7 by adjusting a size of the interval between the interconnectors 3.

As described above, the power generation cell 2 includes the anode support layer 2D made of a porous metal body on the anode electrode side and the cathode support layer 2B made of a porous metal body on the cathode electrode side. The anode-side interconnector 31 is welded to the anode support layer 2D, and the cathode-side interconnector 32 is welded to the cathode support layer 2B. In this way, the power generation cell 2 includes the porous metal support layers 2B and 2D, and the porous metal support layers 2B and 2D are joined to the interconnector 3 made of the metal. Here, in the case in which the power generation cell 2 does not include the porous metal support layers 2B and 2D, the joining between the interconnector 3 and the power generation cell 2 is joining between a metal and a ceramic. On the other hand, in the present embodiment, since the interconnector 3 and the power generation cell 2 are joined to each other by metal joining, joining strength is enhanced as compared with the joining of the ceramic and the metal. Further, in the welding, since joining interfaces melt at the time of a heat input, initial surface layers (oxide films) of the interconnector 3 and the porous metal support layers 2B and 2D are broken, resistance of the joining portion decreases, conductivity is improved, and a cost is low because no additional materials are required.

FIG. 4 is an enlarged view of a portion surrounded by a rectangle A in FIG. 3.

As shown in FIG. 4, the anode-side interconnector 31 is welded to the separator 5 at the first contact portion 311, and a weld portion (first joining portion) 314 is formed in the first contact portion 311. As described above, the anode-side interconnector 31 is welded to the anode support layer 2D at the third contact portion 312, and a weld portion (third joining portion) 315 is formed in the third contact portion 312.

On the other hand, the cathode-side interconnector 32 is joined to the separator 5 at the second contact portion 321 by the diffusion joining using the joining material 8 made of the metal, and forms a joining portion (second joining portion) 324 at the second contact portion 321. As described above, the cathode-side interconnector 32 is joined to the cathode support layer 2B at the fourth contact portion 322 by the welding, and a weld portion (fourth joining portion) 325 is formed in the fourth contact portion 322. Here, the diffusion joining between the cathode-side interconnector 32 and the separator 5 is performed by sandwiching the joining material 8 between the cathode-side interconnector 32 and the separator 5, and pressing and heating the joining material 8. Further, a joining area of the diffusion joining is larger than that of the welding. Therefore, as shown in FIG. 4, a joining area of a joining portion (second joining portion) 324 between the cathode-side interconnector 32 and the separator 5 is larger than that of the joining portion (first joining portion) 314 between the anode-side interconnector 31 and the separator 5. In the present embodiment, the joining material 8 having substantially the same surface area as the second contact portion 321 is used. Therefore, a contact area (surface area of the second contact portion 321) between the cathode-side interconnector 32 and the separator 5 and a joining area (surface area of the second joining portion 324) are substantially the same. Further, in the present embodiment, the joining portion (second joining portion) 324 between the cathode-side interconnector 32 and the separator 5 is formed at a position to cover the joining portion (first joining portion) 314 between the anode-side interconnector 31 and the separator 5 as viewed in a lamination direction of the power generation cells 2.

As described above, since the joining area of the second joining portion 324 in the cathode flow path 7 is larger than the joining area of the first joining portion 314 in the anode flow path 6, the joining force between the cathode-side interconnector 32 and the separator 5 is further enhanced. This prevents the cathode-side interconnector 32 from being peeled off from the separator 5. Further, since the joining force between the cathode-side interconnector 32 and the separator 5 is improved, the separator 5 can be thinned, and the weight of the fuel cell 100 can be reduced. Since electric resistance is proportional to an energizing distance, electric resistance between the cathode-side interconnector 32 and the separator 5 is reduced by thinning the separator 5, and power generation efficiency of the fuel cell 100 is also improved. Furthermore, by thinning the separator 5, a height of the power generation cells 2 in the lamination direction can be prevented, and the solid oxide fuel cell 100 can be made compact.

Since the joining portion (first joining portion) 314 between the anode-side interconnector 31 and the separator 5 is covered with the joining portion (second joining portion) 324 between the cathode-side interconnector 32 and the separator 5 as viewed in the lamination direction of the power generation cells 2, the first joining portion 314 and a periphery thereof are reinforced by the second joining portion 324. Here, when a differential pressure between the anode flow path 6 and the cathode flow path 7 is large, there is a risk that a crack or the like will occur in the separator 5 starting from the first joining portion 314 and the periphery thereof. On the other hand, in the present embodiment, since the first joining portion 314 and the periphery thereof, which tend to become a starting point of the crack or the like, are reinforced by the second joining portion 324, the deformation of the separator 5 is prevented, and an occurrence of the crack or the like in the separator 5 is prevented. Further, since a weld bead generated in the separator 5 due to the welding of the anode-side interconnector 31 and the separator 5 is covered with the second joining portion 324, oxidative degradation due to the air in the bead portion is prevented.

The diffusion joining is joining having higher strength during the operation of the fuel cell 100 since a reaction proceeds by the heat input during the operation of the fuel cell 100. The joining material 8 used for the diffusion joining may be nickel (Ni), copper (Cu), gold (Au), silver (Ag), platinum (Pt), an alloy containing these, or the like. A form of the joining material 8 is not particularly limited, but may be, for example, a paste, a sheet, a wire, a coating, or the like.

In the present embodiment, the cathode-side interconnector 32 and the separator 5 are joined by the diffusion joining, but the present invention is not necessarily limited to this, and any joining method other than the welding is not particularly limited. For example, the cathode-side interconnector 32 and the separator 5 may be brazed. Even in such a joining method, the joining area becomes larger than that of the welding, and the joining force between the cathode-side interconnector 32 and the separator 5 is further strengthened.

According to the solid oxide fuel cell 100 of the embodiment described above, the following effects can be obtained.

The solid oxide fuel cell 100 includes the separator 5 provided between the power generation cells 2 and separated from the power generation cells 2, the anode flow path 6 formed between the anode electrode side of the power generation cell 2 and the separator 5, and the cathode flow path 7 formed between the cathode electrode side of the power generation cell 2 and the separator 5. The anode-side interconnector (anode-side support member) 31 joined to the separator 5 and the anode electrode side of the power generation cell 2 is provided in the anode flow path 6, and the cathode-side interconnector (cathode-side support member) 32 joined to the separator 5 and the cathode electrode side of the power generation cell 2 is provided in the cathode flow path 7. Further, the joining area of the second joining portion 324 at which the cathode-side interconnector (cathode-side support member) 32 is joined to the separator 5 is greater than that of the first joining portion 314 at which the anode-side interconnector (anode-side support member) 31 is joined to the separator 5. Accordingly, the joining force between the cathode-side interconnector 32 and the separator 5 is enhanced, the cathode-side interconnector 32 is prevented from being peeled off from the separator 5, and the fuel cell 100 is prevented from being damaged. Further, since the joining force between the cathode-side interconnector 32 and the separator 5 is improved, the separator 5 can be thinned, and the weight of the fuel cell 100 can be reduced. That is, it is possible to provide the solid oxide fuel cell 100 which is prevented from being damaged and is reduced in weight.

Since the electric resistance is proportional to the energizing distance, the electric resistance between the cathode-side interconnector 32 and the separator 5 is reduced by thinning the separator 5, and the power generation efficiency of the solid oxide fuel cell 100 is also improved. Further, by thinning the separator 5, the height of the power generation cells 2 in the lamination direction can be prevented, and the solid oxide fuel cell 100 can be made compact.

In the solid oxide fuel cell 100, the anode-side interconnector (anode-side support member) 31 and the separator 5 are welded, and the cathode-side interconnector (cathode-side support member) 32 and the separator 5 are joined by the joining method (diffusion joining using a metal or the like) other than the welding. Accordingly, the joining area of the joining portion (second joining portion) 324 between the cathode-side interconnector 32 and the separator 5 is larger than that of the joining portion (first joining portion) 314 between the anode-side interconnector 31 and the separator 5. Therefore, the joining force between the cathode-side interconnector 32 and the separator 5 is strengthened, the cathode-side interconnector 32 is prevented from being peeled off from the separator 5, and the separator 5 can be thinned, so that the weight of the fuel cell 100 can be reduced.

In the solid oxide fuel cell 100, the joining portion (first joining portion) 314 between the anode-side interconnector 31 and the separator 5 is covered with the joining portion (second joining portion) 324 between the cathode-side interconnector 32 and the separator 5 as viewed in the lamination direction of the power generation cells 2. Accordingly, the first joining portion 314 and the periphery thereof are reinforced by the second joining portion 324. That is, since the first joining portion 314 and the periphery thereof, which tend to become the starting point of the crack or the like, are reinforced by the second joining portion 324, the deformation of the separator 5 is prevented, and the occurrence of the crack or the like in the separator 5 is prevented.

Further, since the weld bead generated in the separator 5 due to the welding of the anode-side interconnector 31 and the separator 5 is covered with the second joining portion 324, the oxidative degradation due to the air in the bead portion is prevented.

In the solid oxide fuel cell 100, the plurality of anode-side interconnectors (anode-side support members) 31 and the plurality of cathode-side interconnectors (cathode-side support members) 32 are separately disposed at intervals between the separator 5 and the power generation cell 2. In this way, since the interconnectors 3 are arranged at intervals, the flow path cross-sectional areas of the anode flow path 6 and the cathode flow path 7 increase, and the internal pressure in the flow path decreases. Therefore, by adjusting the size of the interval between the interconnectors 3, it is possible to reduce the differential pressure between the anode flow path 6 and the cathode flow path 7, and it is possible to prevent peeling of the joining between the power generation cell 2 and the interconnector (support member) 3 and the joining between the interconnector (support member) 3 and the separator 5.

In the solid oxide fuel cell 100, the power generation cell 2 includes the cathode support layer (porous metal support layer) 2B on the cathode electrode side, and the cathode-side interconnector (cathode-side support member) 32 and the cathode support layer (porous metal support layer) 2B are metal-joined to each other. Accordingly, joining strength between the power generation cell 2 and the cathode-side interconnector (cathode-side support member) 32 is enhanced as compared with the case in which the power generation cell 2 does not include the cathode support layer (porous metal support layer) 2B (that is, the case in which the metal and the ceramic are joined).

In the solid oxide fuel cell 100, the power generation cell 2 includes the anode support layer (porous metal support layer) 2D on the anode electrode side, and the anode-side interconnector (anode-side support member) 31 and the anode support layer (porous metal support layer) 2D are metal-joined to each other. Accordingly, joining strength between the power generation cell 2 and the anode-side interconnector (anode-side support member) 31 is enhanced as compared with the case in which the power generation cell 2 does not include the anode support layer (porous metal support layer) 2D (that is, the case in which the metal and the ceramic are joined).

A positional relationship among the anode-side interconnector (anode-side support member) 31, the cathode-side interconnector (cathode-side support member) 32, and the separator 5, a positional relationship among the joining portions, and the like shown in the present embodiment are preferred embodiments, and are not necessarily limited thereto. If the joining area of the second joining portion in the cathode flow path 7 is larger than that of the first joining portion in the anode flow path 6, the joining force between the cathode-side interconnector 32 and the separator 5 is further strengthened, and the separator 5 can be thinned. That is, it is possible to obtain effects of strengthening the joining force between the members and reducing the weight.

As in the present embodiment, the power generation cell 2 preferably includes the porous metal support layers 2B and 2D on the anode electrode side and the cathode electrode side, but is not necessarily limited thereto, and may have a configuration in which the porous metal support layer is provided only on one of the anode electrode side or the cathode electrode side, or a configuration in which the porous metal support layer is not provided.

Although the embodiment of the present invention has been described above, the above-mentioned embodiment is merely a part of application examples of the present invention, and is not intend to limit the technical scope of the present invention to the specific configurations of the above-mentioned embodiment.

## Claims

1. A solid oxide fuel cell comprising:
a plurality of laminated power generation cells each including a solid electrolyte layer, an anode electrode disposed on one surface of the solid electrolyte layer, and a cathode electrode disposed on the other surface of the solid electrolyte layer;
a separator provided between the power generation cells and separated from the power generation cells;
an anode flow path formed between an anode electrode side of the power generation cell and the separator; and
a cathode flow path formed between a cathode electrode side of the power generation cell and the separator, wherein
an anode-side support member joined to the separator and the anode electrode side of the power generation cell is provided in the anode flow path,
a cathode-side support member joined to the separator and the cathode electrode side of the power generation cell is provided in the cathode flow path, and
a joining area of a second joining portion at which the cathode-side support member and the separator are joined is greater than a joining area of a first joining portion at which the anode-side support member and the separator are joined.

2. The solid oxide fuel cell according to claim 1, wherein
the anode-side support member and the separator are welded to each other at the first joining portion, and
the cathode-side support member and the separator are joined at the second joining portion by a joining method other than welding.

3. The solid oxide fuel cell according to claim 1 or 2, wherein
the first joining portion is covered with the second joining portion as viewed in a lamination direction of the power generation cells.

4. The solid oxide fuel cell according to any one of claims 1 to 3, wherein
a plurality of the anode-side support members and a plurality of the cathode-side support members are separately disposed at intervals between the separator and the power generation cell.

5. The solid oxide fuel cell according to any one of claims 1 to 4, wherein
the power generation cell further includes a porous metal support layer on the cathode electrode side, and
the cathode-side support member and the porous metal support layer are metal-joined to each other.

6. The solid oxide fuel cell according to any one of claims 1 to 5, wherein
the power generation cell further includes a porous metal support layer on the anode electrode side, and
the anode-side support member and the porous metal support layer on the anode electrode side are metal-joined to each other.
